# EUROPÄISCHE PATENTSCHRIFT

(11) **EP 1 060 223 B1**
(45) Veröffentlichungstag und Bekanntmachung des Hinweises auf die Patenterteilung: **18.08.2004**
(21) Anmeldenummer: 99907544.3
(22) Anmeldetag: 12.02.1999
(51) Int. Cl.: C09K 9/02, G02B 5/23

(54) **PHOTOCHROME BESCHICHTUNGSZUSAMMENSETZUNG UND DAMIT BESCHICHTETE SUBSTRATE**
PHOTOCHROMIC COATING COMPOUND AND SUBSTRATE COATED WITH SAME
COMPOSITION DE REVETEMENT PHOTOCHROME ET SUBSTRATS RECOUVERTS D'UNE TELLE COMPOSITION

(30) Priorität: 13.02.1998 DE 19805977
(43) Veröffentlichungstag der Anmeldung: 20.12.2000
(73) Patentinhaber: Institut Für Neue Materialien gem. GmbH, 66123 Saarbrücken (DE)
(72) Erfinder: FRIES, Kira, D-66538 Neunkirchen (DE); HOU, Lisong, Shanghai Inst. of Optics and Fine, P.O. Box 800-211, Shanghai 20 18 00 (CN); LINDENSTRUTH, Marion, D-66125 Saarbrücken (DE); MENNIG, Martin, D-66287 Quierschied (DE); SCHMIDT, Helmut, D-66130 Saarbrücken-Güdingen (DE)
(74) Vertreter: Barz, Peter
(86) Internationale Anmeldenummer: PCT/EP1999/000920
(87) Internationale Veröffentlichungsnummer: WO 1999/041326

(56) Entgegenhaltungen:
- US-A- 4 556 605
- US-A- 4 784 474
- US-A- 5 017 225
- KWAK, WON SUK ET AL: "Silica sol-gel compositions specifically tailored for acid-sensitive organic photochromics" PPG TECHNOL. J. (1996), 2(1), 45-59 CODEN: PTJOFI;ISSN: 1086-1386, XP002105463
- HOU, L. ET AL: "Enhancement of the photochromic performance of spirooxazine in sol-gel derived organic-inorganic hybrid matrixes by additives" J. SOL-GEL SCI. TECHNOL. (1997), 8(1/2/3), 927-929 CODEN: JSGTEC;ISSN: 0928-0707, XP002105464
- HOU, L. ET AL: "Effect of heat treatment and additives on the photochromic and mechanical properties of sol-gel derived photochromic coatings containing spirooxazine" J. SOL-GEL SCI. TECHNOL. (1997), 8(1/2/3), 923-926 CODEN: JSGTEC;ISSN: 0928-0707, XP002105465

## Beschreibung

Die vorliegende Erfindung betrifft photochrome Beschichtungszusammensetzungen und damit versehene Substrate. Insbesondere betrifft die vorliegende Erfindung photochrome Beschichtungszusammensetzungen, die als wesentliche Komponenten ein Silicium-haltiges Vorkondensat, mindestens einen photochromen Farbstoff und mindestens einen Stabilisator (z.B. ein Antioxidationsmittel und/oder einen UV-Absorber) umfassen. Diese Beschichtungszusammensetzungen eignen sich insbesondere für das Versehen von Substraten aus (vorzugsweise transparenten) Kunststoffen und Mineralgläsern mit einem harten, kratzbeständigen Überzug mit photochromer Langzeitwirkung:

Photochrome Komponenten bzw. Bauelemente mit ausgezeichnetem photochromem Verhalten, insbesondere über lange Zeiträume hinweg, werden heute auf vielfältigen Gebieten eingesetzt, wobei das bekannteste das Gebiet der photochromen Brillengläser ist. Momentan werden diese photochromen Substrate hergestellt, indem man durch sehr komplizierte und teure Verfahren entsprechende Kunststoffe mit organischen photochromen Substanzen versieht. Allgemein sind derartige Verfahren nicht für die Verwendung in größerem Maßstab und auf vielfältigen Gebieten geeignet. Desweiteren beschreibt C. Sanchez in J. Mater. Chem. 7(1) (1997), 61-65, den Einbau von Spiropyranen und Spirooxazinen in organisch-anorganische Matrices aus Diethoxydimethylsilan/Zirkoniumpropoxid und Methyldiethoxysilan/Triethoxysilan, ohne jedoch die Lichtstabilität dieser Systeme zu untersuchen.

Kwak und Crano beschreiben in PPG Technol. J. (1996)2(1) 45-59, den Einbau von photochromen Verbindungen in organisch-anorganische Kieselsäure-Hybridfilme durch ein Niedertemperatur-Sol-Gel-Verfahren. In den Beschichtungen wird als Photostabilisator Tinuvin® eingesetzt. Analoge Systeme werden von Hou et al., Journal of Sol-Gel Science and Technology, 8, 923-926, und US-A-4556605 beschrieben.

Erfindungsgemäß wurde nun gefunden, daß einfach und kostengünstig herstellbare photochrome Beschichtungszusammensetzungen auf der Basis von bestimmten Silicium-haltigen Vorkondensaten, photochromen Farbstoffen und Stabilisatoren sich dazu eignen, entsprechende Substrate mit einem bemerkenswert harten und kratzbeständigen Überzug zu versehen, der Langzeit-Photochromie zeigt. Derartige

Beschichtungszusammensetzungen eignen sich für eine große Zahl von Anwendungen, wie beispielsweise photochrome Brillengläser, Gläser für Sonnenbrillen, Visiere und Skibrillen, aber auch für Verglasungen aller Art, insbesondere für Dekorbedarf, Gebäude, Automobile und Flugzeuge, bei denen ein photochromer Effekt erwünscht ist (und die einer variierenden Bestrahlung mit (insbesondere Sonnen-)Licht ausgesetzt sind).

Dementsprechend stellt die vorliegende Erfindung eine photochrome Beschichtungszusammensetzung bereit, die als wesentliche Komponenten umfaßt:
(a) ein Silicium-haltiges Vorkondensat, abgeleitet von mindestens einem hydrolysierbaren Silan A mit mindestens einem hydrolysestabilen Rest R, der über eine funktionelle Gruppe X verfügt, die eine thermisch und/oder photochemisch induzierte (gegebenenfalls katalysierte) Polyadditions- (einschließlich Polymerisations-) oder Polykondensationsreaktion eingehen kann, sowie gegebenenfalls von einer oder mehreren zusätzlichen hydrolysierbaren Verbindungen von Elementen aus der Gruppe Si, Al, Ti, Zr, Ta, Nb, Sn, Zn, W und Ge;
(b) mindestens einen photochromen Farbstoff,
(c) mindestens einen Stabilisator, vorzugsweise ausgewählt aus Antioxidationsmitteln und UV-Absorbern, und
(d) nanoskaligen Teilchen mit einer durchschnittlichen Teilchengröße von nicht mehr als 200 nm.

Das obige Silan A weist üblicherweise mindestens eine (und vorzugsweise eine einzige) Gruppe X auf, bei der es sich um eine Epoxy-, Mercapto- oder (Meth)acrylgruppe handelt. Weiter wird es besonders bevorzugt, daß das Silan A aus Verbindungen der folgenden allgemeinen Formel (I) ausgewählt ist:

R¹ ₓSiR³ ₍₃₋ₓ₎R (I)

worin die Reste R¹ gleich oder verschieden (vorzugsweise gleich) sind und ausgewählt sind aus Halogenatomen (insbesondere Cl und Br), (vorzugsweise C₁₋₄-)-Alkoxygruppen und (vorzugsweise C₂₋₆-)Acylgruppen (besonders bevorzugt handelt es sich bei den Gruppen R¹ um Methoxy- oder Ethoxygruppen); die Reste R³ einen (vorzugsweise unsubstituierten) Alkyl- oder Aryl-Rest (z.B. Methyl, Ethyl, Propyl, Butyl und Phenyl) repräsentieren und x 1, 2 oder 3 (vorzugsweise 2 oder 3) ist.

Der oder die Reste R werden vorzugsweise ausgewählt aus solchen der folgenden allgemeinen Formeln (II) und (III): 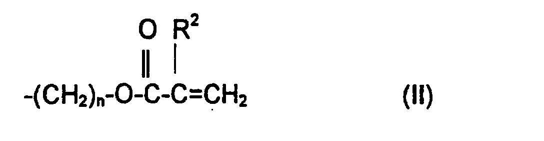 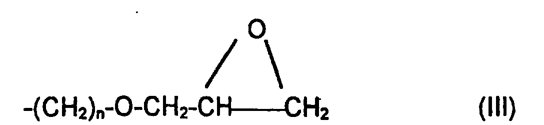 worin R² für Wasserstoff oder Methyl steht und n eine ganze Zahl von 1 bis 6, vorzugsweise 2 bis 4 und insbesondere 3, ist. Der oder die Reste R können jedoch auch andere funktionelle Gruppen aufweisen und gegebenenfalls fluoriert sein.

Konkrete Beispiele für derartige Silane A sind 3-Glycidoxypropyltri(m)ethoxysilan und 3-(Meth)acryloxypropyltri(m)ethoxysilan.

Der photochrome Farbstoff (b) ist vorzugsweise ein solcher aus der Gruppe der Spirooxazine, Spiropyrane, Naphthopyrane (Chromene), Fulgide und Dihydroindolizine. Besonders bevorzugt werden photochrome Farbstoffe aus der Gruppe der Spirooxazine und Naphthopyrane.

Als in der vorliegenden Beschichtungszusammensetzung als Komponente (c) einsetzbare Stabilisatoren eignen sich alle Verbindungen, die in der Lage sind, den bzw. die photochromen Farbstoffe (b) in geeigneter Weise vor dem Angriff (z.B. Zersetzung) durch Strahlung (insbesondere UV-Strahlung) und/oder (aggressive) chemische Substanzen (Sauerstoff, Ozon, freie Radikale usw.) zu schützen. Bevorzugte Beispiele hierfür sind Antioxidationsmittel und UV-Absorber.

Die in der erfindungsgemäßen Beschichtungszusammensetzung als Stabilisatoren verwendbaren Antioxidationsmittel umfassen die dem Fachmann als Antioxidationsmittel bekannten Verbindungen. Vorzugsweise wird das erfindungsgemäß eingesetzte Antioxidationsmittel jedoch aus der Gruppe der mit sterisch hindernden Gruppen substituierten Phenole, Hydrochinone, Brenzkatechine und aromatischen Amine und der organischen Phosphite und Phosphonate ausgewählt. Der Ausdruck "Phenol" soll hierbei nicht nur die einkernigen Phenole, sondern auch die zweikernigen (Bisphenole), dreikemigen (Trisphenole) und mehrkernigen sowie die Naphthole einschließen.

Die in der erfindungsgemäßen Beschichtungszusammensetzung als Stabilisatoren einsetzbaren UV-Absorber schließen die dem Fachmann als UV-Absorber bekannten Verbindungen ein. Bevorzugte UV-Absorber umfassen Derivate des Benzophenons, dessen Substituenten (z. B. Hydroxy- und/oder Alkoxygruppen) sich vorzugsweise in 2- und/oder 4-Stellung befinden; substituierte Benzotriazole, in 3-Stellung Phenyl-substituierte Acrylate (Zimtsäure-Derivate) und Salicylate.

Weitere erfindungsgemäß bevorzugte UV-Absorber sind Naturstoffe wie 3-(5-Imidazolyl)acrylsäure (Urocansäure) und Ergosterol.

Gemäß der vorliegenden Erfindung enthält die erfindungsgemäße Beschichtungszusammensetzung neben den obigen wesentlichen Komponenten (a), (b) und (c) auch nanoskalige Teilchen, die vorzugsweise aus der Gruppe der Oxide, Nitride, Carbide, Silicide, Boride und Carbonitride von Al, Si, Ti, Zr, Hf, W, Ga, Nb, Ta, Sn, Zn und Ge ausgewählt sind. Unter "nanoskaligen Teilchen" werden im vorliegenden Zusammenhang Teilchen mit einer durchschnittlichen Teilchengröße von nicht mehr als 200 nm, vorzugsweise nicht mehr als 100 nm und besonders bevorzugt nicht mehr als 50 nm (z. B. bis zu 30 nm), verstanden. Die Nanopartikel können auch in oberflächenmodifizierter Form eingesetzt werden, um eine Agglomeration der Partikel zu vermeiden. Die Oberflächenmodifizierung erfolgt hierbei z.B. mit Epoxy-, Amino-, Mercapto- oder (Meth)acrylat-funktionellen Silanen; siehe z.B. DE-A-195 40 623.

Besonders bevorzugte nanoskalige Teilchen zur Verwendung in der vorliegenden Erfindung sind solche aus SiO₂ (z.B. Kieselsole).

Derartige nanoskalige Teilchen werden vorzugsweise in Mengen von 2 bis 100 Gewichts-% des eingesetzten Vorkondensats (a) verwendet, wobei ein Anteil von 5 bis 50 Gewichts-% noch bevorzugter ist.

Vorzugsweise sind die Komponenten (a), (b) und (c) der vorliegenden Beschichtungszusammensetzung bezogen auf das Gesamtgewicht dieser Komponenten in solchen Mengen anwesend, daß die Komponente (b) 0,05 bis 5, vorzugsweise 0,1 bis 2 Gewichts-% ausmacht und die Komponente (c) 0,1 bis 5, vorzugsweise 0,5 bis 2,5 Gewichts-% ausmacht.

Im folgenden wird die vorliegende Erfindung detailliert und unter Bezugnahme auf bevorzugte Ausführungsformen derselben näher erläutert.

Wie bereits oben erwähnt, ist das in der erfindungsgemäßen Beschichtungszusammensetzung einzusetzende Silicium-haltige Vorkondensat vorzugsweise von mindestens einem hydrolysierbaren Silan A mit Epoxy-, Mercapto- oder (Meth)acrylatgruppe X abgeleitet.

Die Formulierung auf Epoxy-Basis umfaßt ein von einem Silan A mit Epoxygruppe X abgeleitetes Vorkondensat sowie gegebenenfalls eine oder mehrere andere Komponenten, die vorzugsweise ausgewählt sind aus rein organischen Verbindungen mit Epoxygruppe (vorzugsweise mit zwei oder mehr Epoxygruppen), zusätzlichen organischen Verbindungen, die über funktionelle Gruppen verfügen, die mit Epoxygruppen reaktiv sind, hydrolysierbaren Silanen mit Alkyl- oder fluorierten Alkylgruppen, zusätzlichen Metallalkoxiden, den oben erwähnten nanoskaligen Teilchen, Spacern und Vernetzungsmitteln. Gegebenenfalls wird der Beschichtungsformulierung auch ein Tensid zugesetzt.

Das am meisten bevorzugte Silan A auf Epoxy-Basis ist 3-Glycidoxypropyltrimethoxysilan. Konkrete Beispiele für andere bevorzugte Silane mit Epoxygruppe sind 3-Glycidoxypropylmethyldiethoxysilan, 3-Glycidoxypropyldimethylethoxysilan, 3-Glycidoxypropyldimethylmethoxysilan, 3-Glycidoxypropylmethyldimethoxysilan, 3,4-Epoxybutyltrimethoxysilan und 2-(3,4-Epoxycyclohexyl)ethyltrimethoxysilan.

Bevorzugte Beispiele für die oben erwähnten rein organischen Verbindungen mit Epoxygruppe sind Bisphenol A-Diglycidylether, 2,2-Bis(4-(2,3-epoxypropoxy)cyclohexyl)propan, 1,4-Butandioldiglycidylether, 3,4-Epoxycyclohexylmethyl-3,4-epoxycyclohexancarboxylat, 4-Epoxyethyl-1,2-epoxycyclohexan, Ethylenglycoldiglycidylether, Triglycidylglycerin, Cresylglycidylether, Neopentylglycoldiglycidylether, 1-(2,3-Epoxypropoxy)-4-[N,N-bis(2,3-epoxypropyl)amino]benzol, Bis(4-[N,N-bis(2,3-epoxypropyl)amino]phenyl)methan, Triglycidylisocyanurat, Phenylglycidylether, 5,5-Dimethyl-1,3-bis(2,3-epoxypropyl)-2,4-imidazolidindion, Heptafluorpropyl-1,3-bis[2-(2,3-epoxypropoxy)hexafluor-2-propyl]benzol, 2-(3,4-Epoxycyclohexyl-5,5-spiro-3,4-epoxy)cyclohexan-meta-dioxan, Styroloxid, Butadiendioxid, Divinylbenzoldioxid, Diglycidylether, Poly(propylenglycol)bis(2,3-epoxypropylether), Bis(3,4-epoxycyclohexyl)adipat, 3-Bis[(2,3-epoxypropoxymethyl)methoxy]-1,2-propandiol, 1,4-Bis(hydroxymethyl)cyclohexan-bis(2,3-epoxypropylether) und Hexahydrophthalsäurediglycidylether. Besonders bevorzugte Verbindungen aus der genannten Gruppe sind cycloaliphatische oder aliphatische Verbindungen wie 3,4-Epoxycyclohexylmethyl-3,4-epoxycyclohexancarboxylat oder Bis(3,4-epoxycyclohexyl)adipat. Diese Verbindungen werden insbesondere auf Grund ihrer im Vergleich zu aromatischen Verbindungen verbesserten UV-Stabilität bevorzugt.

Organische Verbindungen, wie beispielsweise Phenole, können in die Beschichtungszusammensetzung als Spacer eingeführt werden. Die zu diesem Zweck am häufigsten eingesetzten Verbindungen sind Bisphenol A, (4-Hydroxyphenyl)adamantan, Hexafluorbisphenol A, 2,2-Bis(4-hydroxyphenyl)perfluorpropan, 9,9-Bis(4-hydroxyphenyl)fluorenon, 1,2-Bis-3-(hydroxyphenoxy)ethan, 4,4'-Hydroxyoctafluorbiphenyl und Tetraphenolethan.

Für die Modifizierung mit Alkyl-substituierten Alkoxysilanen können beispielsweise die folgenden Verbindungen eingesetzt werden: Tetramethoxysilan, Tetraethoxysilan, Tetra-n-propoxysilan, Tetra-n-butoxysilan, Cyclohexyltrimethoxysilan, Cyclopentyltrimethoxysilan, Ethyltrimethoxysilan, Phenylethyltrimethoxysilan, Phenyltrimethoxysilan, n-Propyltrimethoxysilan, Cyclohexylmethyldimethoxysilan, Dimethyldimethoxysilan, Diisopropyldimethoxysilan, Phenylmethyldimethoxysilan, Phenylethyltriethoxysilan, Phenyltriethoxysilan, Phenylmethyldiethoxysilan und Phenyldimethylethoxysilan.

Fluorierte Silane werden insbesondere dann in die Beschichtungszusammensetzung eingeführt, wenn eine niedrige Oberflächenenergie der Beschichtung gewünscht ist, die zu schmutz- und wasserabweisenden Eigenschaften führt. Beispiele für zu diesem Zweck geeignete Silane sind solche, die über direkt an Silicium gebundene fluorierte Alkyl-Reste mit mindestens 4 Kohlenstoffatomen verfügen, wobei die Kohlenstoffatome in α- und β-Stellung zum Silicium vorzugsweise keine Fluoratome tragen, z.B. (Tridecafluor-1,1,2,2-tetrahydrooctyl)methyldiethoxysilan, (Tridecafluor-1,1,2,2-tetrahydrooctyl)triethoxysilan, (Heptadecafluor-1,1,2,2-tetrahydrodecyl)-methyldiethoxysilan und (Heptadecafluor-1,1,2,2-tetrahydrodecyl)triethoxysilan.

Beispiele für andere hydrolysierbare Verbindungen, die zur Herstellung des Silicium-haltigen Vorkondensats (a) herangezogen werden können, sind insbesondere die Alkoxide (vorzugsweise mit C₁₋₄-Alkoxygruppen) von Aluminium, Titan, Zirkonium, Tantal, Niob, Zinn, Zink, Wolfram und Germanium. Konkrete Beispiele für derartige Verbindungen sind Aluminium-sek.-butylat, Titanisopropoxid, Titanpropoxid, Titanbutoxid, Zirkoniumisopropoxid, Zirkoniumpropoxid, Zirkoniumbutoxid, Zirkoniumethoxid, Tantalethoxid, Tantalbutoxid, Niobethoxid, Niobbutoxid, Zinn-t-butoxid, Wolfram(VI)ethoxid, Germaniumethoxid, Germaniumisopropoxid und Di-sek.-butoxyaluminotriethoxysilan.

Insbesondere bei den reaktionsfähigeren Alkoxiden (z.B. von Al, Ti, Zr usw.) kann es sich empfehlen, diese in komplexierter Form einzusetzen, wobei Beispiele für geeignete Komplexierungsmittel zum Beispiel ungesättigte Carbonsäuren und β-Dicarbonyl-Verbindungen, wie z.B. Methacrylsäure, Acetylaceton und Acetessigsäureethylester, sind.

Die bereits oben erwähnte Einarbeitung von nanoskaligen anorganischen Teilchen in die Beschichtungszusammensetzung führt zu einer verbesserten Kratzfestigkeit und Stabilität des resultierenden Überzuges und erlaubt auch die Herstellung dickerer Überzüge. Zusätzlich kann auf diese Weise der Brechungsindex des Überzuges eingestellt werden. Beispiele für erfindungsgemäß geeignete nanoskalige Teilchen sind solche aus SiO₂, ZrO₂, TiO₂, HfO₂, GeO₂, Nb₂O₅, Ta₂O₅, SnO₂, Al₂O₃, ZnO und GeO₂, wobei solche aus SiO₂ besonders bevorzugt werden.

Die Überzüge auf Epoxy-Basis werden vorzugsweise thermisch gehärtet. Für diesen Zweck geeignete Vernetzungsmittel sind insbesondere Imidazole, Amine und Säureanhydride. Wenn Imidazole als Vemetzungsmittel eingesetzt werden sollen, ist 1-Methylimidazol besonders bevorzugt. Andere bevorzugte Beispiele für Imidazol-Vemetzungsmittel sind 2-Methylimidazol und 2-Phenylimidazol. Beispiele für Vemetzungsmittel aus der Gruppe der primären, sekundären und tertiären Amine sind Ethylendiamin, Diethylentriamin, Triethylentetramin, 1,6-Diaminohexan, 1,6-Bis(dimethylamino)hexan, Tetramethylethylendiamin, N,N,N',N",N"-Pentamethyldiethylentriamin, 1,4-Diazabicyclo[2.2.2]octan, Cyclohexan-1,2-diamin, 2-(Aminomethyl)-3,3,5-trimethylcyclopentylamin, 4,4'-Diaminocyclohexylmethan, 1,3-Bis(aminomethyl)cyclohexan, Bis(4-amino-3-methylcyclohexyl)methan, 1,8-Diamino-pmenthan, 3-(Aminoethyl)-3,3,5-trimethylcyclohexylamin (Isophorondiamin), Piperazin, Piperidin, Urotropin, Bis(4-aminophenyl)methan und Bis(4-aminophenyl)sulfon. Die als Vernetzungsmittel eingesetzten Amine können auch mit Silanen funktionalisiert sein. Beispiele hierfür sind N-(2-Aminoethyl)-3-aminopropyltriethoxysilan, N-(2-Aminoethyl)-3-aminopropyltrimethoxysilan, Aminopropyltrimethoxysilan und Aminopropyltriethoxysilan. Zusätzlich können Bortrifluorid-Addukte von Aminen, wie beispielsweise BF₃-Ethylamin, eingesetzt werden. Weiter kann die Vernetzung und Härtung mit Hilfe von Säureanhydriden (vorzugsweise in Kombination mit tertiären Aminen) wie Methylbicyclo[2.2.1]hepten-2,3-dicarbonsäureanhydrid, Hexahydronaphthalindicarbonsäureanhydrid, Phthalsäureanhydrid und 1,2-Cyclohexandicarbonsäureanhydrid bewerkstelligt werden.

Wie oben erwähnt, kann der Beschichtungsformulierung auch ein Tensid zugesetzt werden. Dies verhindert die Aggregation der Farbstoff-Moleküle im Überzug. Weiter können der Beschichtungszusammensetzung selbstverständlich auch organische Lösungsmittel zugesetzt werden, um deren Viskosität den Anforderungen des eingesetzten Beschichtungsverfahrens (z.B. Tauchen, Sprühen, Streichen, Schleudern usw.) anzupassen.

Eine weitere bevorzugte Beschichtungszusammensetzung ist eine solche auf Acrylat- bzw. Methacrylat-Basis, d.h. eine solche, die ein Vorkondensat auf der Basis eines Silans A mit einer (Meth)acrylatgruppe X enthält. Eine derartige Beschichtungszusammensetzung kann unter Verwendung derselben zusätzlichen Materialien hergestellt werden, wie sie bereits oben in Verbindung mit der Beschichtungszusammensetzung auf Epoxy-Basis beschrieben worden sind.

Konkrete (und bevorzugte) Beispiele für Silane A mit (Meth)acrylatgruppe X sind 3-(Meth)acryloxypropyltrimethoxysilan, 3-(Meth)acryloxypropylmethyldimethoxysilan, 2-(Meth)acryloxyethyltrimethoxysilan und 2-(Meth)acryloxyethylmethyldimethoxysilan. Unter diesen wird 3-Methacryloxypropyltrimethoxysilan besonders bevorzugt.

Beispiele für im Falle von Beschichtungszusammensetzungen auf (Meth)acrylat-Basis als Spacer verwendbare Komponenten sind Bisphenol A-Bisacrylat, Bisphenol A-Bismethacrylat, Trimethylolpropantriacrylat, Trimethylolpropantrimethacrylat, Neopentylglycoldimethacrylat, Neopentylglycoldiacrylat, Diethylenglycoldiacrylat, Diethylenglycoldimethacrylat, Triethylenglycoldiacrylat, Diethylenglycoldimethacrylat, Tetraethylenglycoldiacrylat, Tetraethylenglycoldimethacrylat, Polyethylenglycoldiacrylat, Polyethylenglycoldimethacrylat, 2,2,3,3-Tetrafluor-1,4-butandioldiacrylat und - dimethacrylat, 1,1,5,5-Tetrahydroperfluorpentyl-1,5-diacrylat und -dimethacrylat, Hexafluorbisphenol A-Diacrylat und -Dimethacrylat, Octafluorhexandiol-1,6-diacrylat und -dimethacrylat, 1,3-Bis(3-methacryloxypropyl)tetrakis(trimethyfsüoxy)disiloxan, 1,3-Bis(3-acryloxypropyl)tetrakis(trimethylsiloxy)disiloxan, 1,3-Bis(3-methacryloxypropyl)tetramethyldisiloxan und 1,3-Bis(3-acryloxypropyl)tetramethyldisiloxan.

Die Beschichtungszusammensetzungen auf (Meth)acrylat-Basis werden vorzugsweise mit Hilfe von thermischen Katalysatoren gehärtet. Beispiele hierfür sind die herkömmlichen thermischen Polymerisationsinitiatoren, wie beispielsweise Azobisisobutyronitril, Diacylperoxide (z.B. Dibenzoylperoxid und Dilauroylperoxid), Peroxodicarbonate, Alkylperester, Perketale, Alkyl- oder Arylperoxide, Ketonperoxide und Hydroperoxide.

Die Komponente (a) der erfindungsgemäßen Beschichtungszusammensetzung kann beispielsweise erhalten werden durch ein Verfahren, wie es beispielsweise in "Journal of Sol-Gel Science and Technology" (1994), Band 2, S. 635 - 639 beschrieben ist.

Die eingesetzten nanoskaligen Teilchen können in Form von redispergierbaren Pulvern oder in Form von kolloidalen Suspensionen sowie in oberflächenmodifizierter Form zugesetzt werden.

Erfindungsgemäß wurde gefunden, daß die Schaltkinetik der Umwandlung vom farblosen Zustand in den farbigen Zustand der photochromen Materialien über die Konzentration des Vernetzungsmittels und/oder durch Variation des verwendeten Typs von Vernetzungsmittel bzw. Spacer gesteuert (in der Regel: verlangsamt) werden kann.

Um eine wirksame Verzögerung der Schaltkinetik zu erreichen, werden gewöhnlich 1 bis 50 Mol%, vorzugsweise 10 bis 30 Mol%, Vernetzungsmittel pro funktionelle Gruppe der Netzwerk-bildenden Komponenten und Spacer eingesetzt.

Alternativ zur oder in Kombination mit der Vernetzungsmittel-Konzentration läßt sich die Schaltkinetik der photochromen Farbstoffe in der Matrix durch Variation des Typs von Vernetzungsmittel und/oder Spacerart (polar) einstellen. Hierbei erzielt man im Vergleich zur Kinetik in ethanolischer Lösung eine stufenlose Einstellung bis hin zu vielfachen Werten.

Unter polaren Späcern werden hierbei organische Verbindungen mit mindestens zwei funktionellen Gruppen (Epoxy, (Meth)acryl, Mercapto, Vinyl, etc.) an den Molekülenden verstanden, die aufgrund des Einbaus von aromatischen oder heteroaromatischen Gruppen (wie Phenyl, Benzyl, etc.) und Heteroatomen (wie O, S, N, etc.) polare Eigenschaften besitzen und eine polare Wechselwirkung mit den Photosubstanzen eingehen können.

Die polaren Spacer werden gewöhnlich in einem Molverhältnis zu den Netzwerk-bildenden Komponenten bis zu 3:1, vorzugsweise bis zu 1:1, eingesetzt.

Beispiele. für oben erwähnten polaren Spacer sind:
a) auf Epoxidbasis:
   Poly(phenylglycidylether)-co-formaldehyd, Adipinsäure-bis-(3,4-epoxycyclohexylmethylester), 3-[Bis-(2,3-epoxypropoxymethyl)-methoxy]-1,2-propandiol, 4,4-Methylen-bis-(N,N-diglycidylanilin), Bisphenol A-diglycidylether, N,N-Bis-(2,3-epoxypropyl)-4-(2,3-epoxypropoxy)-anilin, 3,4-Epoxycyclohexancarbonsäure-(3,4-epoxycyclohexylmethylester), Glycerin-propoxylat-triglycidylether, Hexahydrophthalsäure-diglycidylester, Isocyanursäuretris-(2,3-epoxypropyl)-ester, Poly-(propylenglykol)-bis-(2,3-epoxypropylether), 4,4'-Bis(2,3-epoxypropoxy)biphenyl
b) auf Methacryl- und Acryl-Basis:
   Bisphenol A -dimethacrylat, Tetraethylenglycoldimethacrylat, 1,3-Diisopropenylbenzol, Divinylbenzol, Diallylphthalat, Triallyl 1,3,5-Benzoltricarboxylat, 4,4'-Isopropylidendiphenoldimethacrylat, 2,4,6-Triallyloxy-1,3,5-Triazin, 1,3-Diallylurea, N,N'-Methylenbisacrylamid, N,N'-Ethylenbisacrylamid, N,N'-(1,2-Dihydroxyethylen)-bisacrylamid, (+)-N,N'-Diallyltartardiamid, Methacrylanhydrid, Tetraethylen-glycoldiacrylat, Pentaerythritol-triacrylat, Diethyldialiylmalonat, Ethylen-diacrylat, Tripropylen-glycol-diacrylat, Ethylen-glycol-dimethacrylat, Triethylen-glycoldimethacrylat, 1,4-Butandiol-dimethacrylat, 1,6-Hexandiol-diacrylat, 2-Ethyl-2-(hydroxymethyl)-1,3-propandiol-trimethacrylat, Allylmethacrylat, Diallylcarbonat, Diallylsuccinat, Diallylpyrocarbonat,

Die bevorzugten photochromen Verbindungen (b), die für die Zwecke der vorliegenden Erfindung eingesetzt werden, sind photochrome Verbindungen, die zur Klasse der Spirooxazine oder Naphthopyrane (Chromene) gehören.

Beispiele für besonders bevorzugte photochrome Verbindungen, die der Klasse der Spirooxazine angehören, sind diejenigen mit der folgenden allgemeinen Formel (IV): 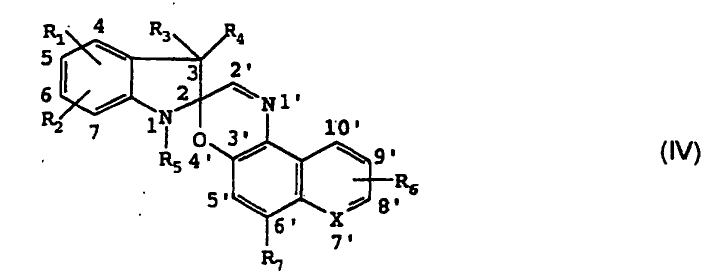 worin
R₁ und R₂, gleich oder verschieden voneinander, für Wasserstoff, Halogen (z.B. Chlor, Brom oder Fluor), C₁₋₅-Alkoxy, Nitro, Cyano und lineares oder verzweigtes C₁₋₅-Alkyl (gegebenenfalls mit einem oder mehreren Substituenten aus der Gruppe der Halogenatome wie Chlor, Brom und Fluor, C₁₋₅-Alkoxy-, C₁₋₅-Alkylthio-, C₁₋₅-Carboxyalkyl- und Cyanogruppen substituiert) stehen; und
R₁ und R₂ an irgendeine der 4-, 5-, 6- und 7-Stellungen der Indolin-Einheit geknüpft sein können;
R₃ und R₄ unabhängig voneinander für eine lineare oder verzweigte C₁₋₅-Alkylgruppe, eine Phenylgruppe oder eine Benzylgruppe stehen; oder
R₃ und R₄ zusammen mit dem Kohlenstoffatom, an das sie geknüpft sind, eine C₄₋₈-Cycloalkylgruppe bilden können;
R₅ eine Phenylgruppe, Benzylgruppe oder Allylgruppe oder eine lineare oder verzweigte C₁₋₅-Alkylgruppe darstellt, die gegebenenfalls mit einem oder mehreren Halogenatomen (z.B. Chlor, Brom und Fluor) und/oder einer oder mehreren C₁₋₅-Alkoxygruppen, C₁₋₅-Alkylthiogruppen, C₁₋₅-Carboxyalkylgruppen oder Cyanogruppen substituiert sein kann;
R₆ ein Wasserstoffatom, Halogenatom (wie z.B. Chlor, Brom oder Fluor) oder eine Gruppe repräsentiert, die ausgewählt ist aus: C₁₋₅-Alkoxygruppen, C₁₋₅-Alkylthiogruppen, C₁₋₅-Carboxyalkylgruppen, Nitrogruppen und Cyanogruppen; und linearen oder verzweigten C₁₋₅-Alkylgruppen, die gegebenenfalls substituiert sein können mit einem oder mehreren Halogenatomen, wie beispielsweise Chlor, Brom und Fluor, und/oder einer oder mehreren C₁₋₅-Alkoxygruppen, C₁₋₅-Alkylthiogruppen, C₁₋₅-Carboxyalkylgruppen und Cyanogruppen; oder
R₆ einen kondensierten aromatischen oder heterocyclischen Ring darstellt; und
R₆ sich in irgendeiner der 7'-, 8'-, 9'- und 10'-Stellungen des Naphthalin-Restes befinden kann, wenn es von Wasserstoff oder einem kondensierten aromatischen oder heterocyclischen Ring verschieden ist;
R₇ für Wasserstoff oder eine Gruppe -NR₈R₉ steht, in welcher R₈ und R₉ unabhängig voneinander ein Wasserstoffatom, eine lineare oder verzweigte C₁₋₅-Alkylgruppe, eine Phenylgruppe oder eine Benzylgruppe repräsentieren; oder R₈ und R₉ zusammen mit dem Stickstoffatom, an das sie geknüpft sind, eine monocyclische oder polycyclische Struktur mit 5 bis 12 Gliedern, die gegebenenfalls ein weiteres aus Stickstoff und Sauerstoff ausgewähltes Heteroatom enthält, bilden; und
X für CH oder N steht.

Bevorzugte photochrome Verbindungen aus der Klasse der Spirooxazine, die sich zur Verwendung in der vorliegenden Erfindung eignen, sind diejenigen mit den folgenden Substituenten in der allgemeinen Formel (IV):
R₁ und R₂ stehen unabhängig voneinander für Wasserstoff oder eine Methylgruppe;
R₃ und R₄ stehen beide für eine Methylgruppe oder repräsentieren zusammengenommen eine Cyclohexylgruppe;
R₅ ist eine Methylgruppe;
R₇ steht für ein Wasserstoffatom oder eine Gruppe -NR₈R₉, worin R₈ und R₉ zusammen mit dem Stickstoffatom, an das sie geknüpft sind, einen Piperidyl-, Morpholyl-, Pyrrolidyl- oder Hexamethylenamin-Ring bilden;
R₆ bedeutet ein Wasserstoffatom, eine Nitrogruppe oder eine Oxomethyl-, Oxoethyloder Oxophenylgruppe; und
X repräsentiert CH.

Konkrete Beispiele für Verbindungen der obigen Formel (IV) sind 1,3,3 Trimethyl-6'piperidino-spiro-[indolino-2,3-(3H)-naphtho-(2,1-b)-(1,4)-oxazin], das unter der Handelsbezeichnung Variacrol Red PNO von Great Lakes Chemical Italia S.r.l. erhältlich ist und die folgende Formel aufweist: 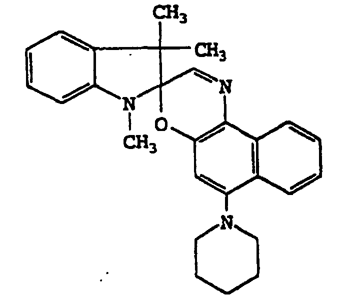 sowie 1,3,3-Trimethyl-spiro-[indolino-2,3-(3H)-naphtho-(2,1-b)-(1,4)-oxazin], das unter der Handelsbezeichnung Variacrol Blue A von Great Lakes Chemical Italia S.r.l. erhältlich ist und die folgende Formel aufweist:

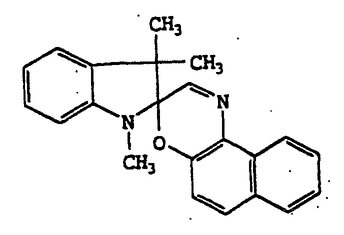

Beispiele für photochrome Verbindungen, die zur Klasse der Chromene (Naphthopyrane) gehören und für die Zwecke der vorliegenden Erfindung nützlich sind, sind diejenigen mit der folgenden allgemeinen Formel (V): 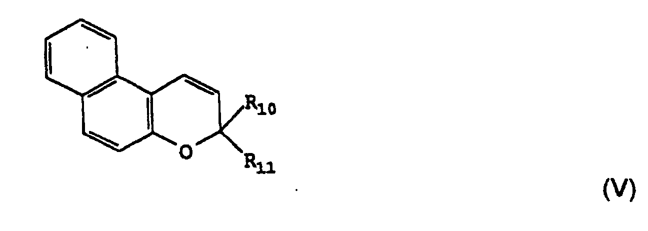 worin
R₁₀ und R₁₁ unabhängig voneinander für ein Wasserstoffatom, eine lineare oder verzweigte C₁₋₅-Alkylgruppe, eine Phenylgruppe, die mit 1 bis 5 Halogenatomen (z.B. Fluor, Chlor oder Brom) substituiert sein kann, oder eine Cyclopropylgruppe stehen; oder R₁₀ und R₁₁ zusammengenommen eine alicyclische C₅- oder C₆-Gruppe oder eine Adamantylgruppe darstellen.

Bevorzugte photochrome Verbindungen aus der obigen Klasse der Chromene sind diejenigen der allgemeinen Formel (V), in welcher R₁₀ und R₁₁ für eine unsubstituierte Phenylgruppe stehen.

Ein konkretes Beispiel für eine photochrome Verbindung aus der Klasse der Chromene mit der obigen Formel (V) ist 2,2-Diphenyl-5,6-benzo-(2)-chromen, das unter der Handelsbezeichnung Variacrol Photo L von Great Lakes Chemical Italia S.r.l. erhältlich ist und die folgende Formel aufweist:

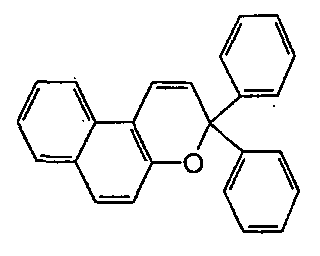

Erfindungsgemäß als Stabilisatoren einsetzbare Antioxidationsmittel und UV-Absorber wurden bereits oben erwähnt. Konkrete Beispiele hierfür sind 2,6-Di-tertbutyl-4-methylphenol (BHT), Bis(3,5-di-tert-butyl-4-hydroxyphenyl)methan (BDPM), Tetrafluorhydrochinon, Ergosterol und Urocansäure sowie (gegebenenfalls) substituierte Triphenylphosphite (z.B. Trinonylphenylphosphit (TNPP)).

Selbstverständlich können auch andere Stabilisatoren je nach den konkreten Gegebenheiten zu besonders wünschenswerten Ergebnissen führen. Beispiele für derartige Stabilisatoren sind N,N'-disubstituierte p-Phenytendiamine, Diphenylamin-Derivate, Aminophenol-Derivate, Phenyl-benzyl-harnstoffe, Aldehyd-Amin-Kondensationsprodukte (z.B. Heterocyclen), Keton-Amin-Kondensationsprodukte (z.B. Heterocyclen), Schwefel-Verbindungen wie Mercaptane (Alkylmercaptane, Mercaptobenzimidazol), Thioether (Thiobisphenole, Thiobisalkancarbonsäureester), Disulfide (z.B. Dialkylsulfide), Dithiocarbamate, Derivate der Dithiophosphorsäure, Thiobisphenole, Schwefel-haltige Amine, Tocopherol, Octyl- und Dodecylgallat, Ascorbinsäure, Milchsäure, Citronensäure und Weinsäure sowie deren Salze und dergleichen.

Die Herstellung einer erfindungsgemäßen photochromen Beschichtungszusammensetzung soll im folgenden an einem konkreten Beispiel unter Verwendung von 3-Glycidoxypropyltrimethoxysilan als Silan A veranschaulicht werden.

Die Herstellung beginnt mit einer 2-stündigen Vorhydrolyse des 3-Glycidoxypropyltrimethoxysilans (GPTMS) mit verdünnter Salzsäure bei Raumtemperatur. Unter Rühren bei Raumtemperatur wird eine Lösung von Bisphenol A in Ethylalkohol dem vorhydrolysierten GPTMS zugesetzt, worauf 1-Methylimidazol dazugegeben wird. Darauf wird noch 1 Stunde weiter bei Raumtemperatur gerührt. Nach der Zugabe der photochromen Verbindung, des Stabilisators und eines Tensids, um eine bessere Dispergierung der photochromen Verbindung zu erzielen, wird weitere 30 Minuten lang gerührt, was zu einer Lösung führt, die sich für die Beschichtung von Gegenständen aus Kunststoffen und Glas eignet.

Wenn organische Epoxy-Verbindungen, andere Silan-Verbindungen, Alkoxide von von Silicium verschiedenen Elementen und/oder anorganische nanoskalige Teilchen und dergleichen zusätzlich in die Beschichtungszusammensetzung eingeführt werden sollen, werden gegebenenfalls modifizierte Syntheseverfahren eingesetzt. Zum Beispiel können zusätzliche Silan-Komponenten mit Ausnahme von Fiuoralkyisilan-Verbindungen zusammen mit den Silanen auf Epoxy-Basis einer Vorhydrolyse unterzogen werden. Danach können zusätzliche Epoxide, wie Bis(3,4-epoxycyclohexyl)adipat oder 3,4-Epoxycyclohexylmethyl-3,4-epoxycyclohexancarboxylat, und von Bisphenol A verschiedene organische Verbindungen zugesetzt werden. Wenn der Beschichtungszusammensetzung Trialkoxysilane mit fluorierter Alkylgruppe einverleibt werden sollen, werden diese Silane vorzugsweise zugegeben, nachdem die anderen Silan-Komponenten vorhydrolysiert worden sind. Dadurch bilden sich zwei Phasen. Darauf wird die Wassermenge zugegeben, die für die halbstöchiometrische Hydrolyse der fluorierten Alkoxysilane erforderlich ist, und die Mischung wird zumindest solange gerührt, bis sie nur noch eine Phase zeigt. Dieses Verfahren stellt eine homogene Verteilung des fluorierten Silans sicher und ist vor allem deshalb zu empfehlen, da fluorierte Alkoxysilane in der Regel schneller als die anderen eingesetzten Silan-Komponenten hydrolysieren. Gegebenenfalls können der Beschichtungszusammensetzung Alkoxide von anderen Elementen zugesetzt werden. Im Falle der Alkoxide, die schneller hydrolysieren als vergleichbare Silicium-Verbindungen, werden diese vorzugsweise in Form von komplexierten Vorstufen eingesetzt, um eine Ausfällung der entsprechenden Oxide während der Hydrolyse zu verhindern. Wie bereits oben erwähnt, sind für diesen Zweck geeignete Komplexierungsmittel beispielsweise Methacrylsäure, Acetylaceton und Acetessigsäureethylester.

Nanoskalige Teilchen, wie beispielsweise die oben erwähnten, können der Beschichtungszusammensetzung zugegeben werden, um dem Überzug zusätzliche Härte zu verleihen. Um eine Agglomeration der Teilchen im Beschichtungssol zu verhindern, werden die Oberflächen der Teilchen vorzugsweise mit geeigneten Stabilisatoren modifiziert. Bevorzugt werden solche nanoskaligen Teilchen in die Beschichtungszusammensetzung eingeführt, die im Handel in Form von redispergierbaren Pulvern oder kolloidalen Lösungen in Alkoholen erhältlich sind. Besonders nützlich für die Ziele der vorliegenden Erfindung sind SiO₂-Teilchen in Methanol und Isopropanol, die im Handel von Nissan Chemical erhältlich sind (MA-ST, IPA-ST). Die nanoskaligen Teilchen werden der Beschichtungszusammensetzung vorzugsweise nach der Vorhydrolyse des Silans A zugesetzt. Das alkoholische SiO₂-Sol, dem ein zusätzlicher Sol-Stabilisator (z.B. Tetrahexylammoniumhydroxid) zugesetzt wurde, wird mit dem vorhydrolysierten Epoxysilan vermischt und das Lösungsmittel wird darauf im Vakuum ganz oder teilweise abgezogen. Vorzugsweise geht man so vor, daß zunächst separat eine Mischung von nanoskaligen Teilchen in Silan A (z.B. auf Epoxy-Basis) hergestellt wird und dann die geeignete Menge der nanoskaligen Teilchen in dieser Form der bzw. den vorhydrolysierten Silan-Komponente(n) der Beschichtungszusammensetzung zugesetzt wird.

Die auf die Substrate aufgebrachten Beschichtungszusammensetzungen können durch eine Vielzahl von möglichen Härtungsmitteln, wie sie bereits oben angegeben wurden, gehärtet werden. Im Falle der Epoxysilane werden Amine bevorzugt, da diese im Vergleich zu Anhydriden zu niedrigeren Härtungstemperaturen führen. Wenn Imidazole als Härtungsmittel eingesetzt werden, ist 1-Methylimidazol besonders bevorzugt. Weitere Härtungsmittel, die sich für die Zwecke der vorliegenden Erfindung besonders eignen, sind aliphatische und cycloaliphatische Amine. Aliphatische Amine, die primäre Aminogruppen enthalten, sind sehr reaktiv und führen zu kurzen Topfzeiten. Deshalb werden cycloaliphatische Amine wie Isophorondiamin oder Menthandiamin und tertiäre Amine wie Tetramethylethylendiamin besonders bevorzugt. Da diese Verbindungen reaktiver sind als die Imidazole, werden sie der Beschichtungszusammensetzung möglichst erst kurz vor der Beschichtungsoperation zugesetzt.

Gegebenenfalls kann die Beschichtungsformulierung mit Lösungsmitteln, z.B. Alkoholen wie Methanol und Ethanol oder Tetrahydrofuran verdünnt werden, um die Viskosität der Beschichtungszusammensetzung an die Anforderungen des konkret eingesetzten Beschichtungsverfahrens anzupassen.

Selbstverständlich können im Fall der Silane A mit (Meth)acrylatgruppen und anderer Silane mit geeigneten Gruppen X zu den gerade für den Fall der Epoxysilane geschilderten Verfahren analoge Verfahren eingesetzt werden, um die Beschichtungszusammensetzung herzustellen.

Wie bereits oben erwähnt, werden die hergestellten Beschichtungszusammensetzungen auf für den Fachmann herkömmliche Art und Weise auf die entsprechenden Substrate aufgebracht und anschließend je nach Anwesenheit der funktionellen Gruppen und der Härtungskatalysatoren thermisch und/oder photochemisch gehärtet. Besonders bevorzugte Beschichtungsverfahren sind Tauchen, Walzenbeschichtung, Sprühbeschichtung und Schleuderbeschichtung.

Die erfindungsgemäße Beschichtungszusammensetzung eignet sich insbesondere für das Versehen von (vorzugsweise transparenten) Substraten aus Kunststoff oder Glas mit einem photochromen Überzug. Beispiele für derartige Substrate sind Brillengläser, Sonnengläser, optische Linsen, Gebäude-, Automobil- und Flugzeugverglasungen, Visiere für Helme (z.B. für Motorradfahrer und Skifahrer). Weitere geeignete Substrate sind Papier, Textilien, Metall, Holz, Stein und Keramik.

Noch konkreter eignen sich die erfindungsgemäßen Beschichtungszusammensetzungen z.B. für folgende Anwendungen:
- für Verglasungen sowie Verscheibungen von Fortbewegungsmitteln aller Art (Schiffe, Schienenfahrzeuge, Automobile, Flugzeuge), als komplette oder stellenweise Beschichtung sowie auf laminierbaren Folien, die auf die Verscheibung aufgebracht werden können;
- für Architekturverglasung aus Glas und Kunststoff im Innen- und Außenbereich einschließlich Raumteiler (Bildschirmarbeitsplätze, Kulturzentren wie Museen, Konzerthäuser und Ausstellungsräumen, öffentliche Gebäude, privater Wohnbereich, Gewächshäuser);
- Beschichtungen von Folien aller Art (Rolläden, laminierbare Folien, Verpackungsmaterial für z.B. Geschenke und Pflanzen, Haltbarkeitssiegel in Verpackungen);
- für Sehhilfen und als Sicht- bzw. Blendschutz (Brillen, Sonnenbrillen, Sportbrillen, Helmvisiere, Kontaktlinsen, Lupen, Lesehilfen);
- zur Kennzeichnung von Papier (Banknoten, Dokumente), von Ausweisen, Kreditund Scheckkarten und anderen Wertgegenständen;
- für optische Elemente mit selbstregelnder Transmission (Linsen, Gradientenlinsen, Filter, Linsen für Photoapparate, Femrohre, Videokameras, Filmkameras);
- als Dekorationselemente auf Leuchten, Textilien, wie Kleidung, textile Anwendung im Außenbereich, wie Sonnenschirme und Zelte, Möbeln, Sanitärgegenstände, Spielzeug, Scherzartikel, Fassaden, Fahrzeugen (photochromer Lack);
- als Dekorelemente auf Tapeten, Anstrichen, Bühnenbildern;
- als Dekorelemente in der Papierindustrie (Grußkarten, Briefköpfe, Kennzeichnung, Werbeanbringung);
- für Erzeugnisse aus Keramik und Porzellan (Fliesen, Geschirr, Figuren);
- in der Kunst (Gemälde, Bilder, Skulpturen, Gestaltung spezieller Effekte);
- als Dekorelemente für Zier- und Schmuckgegenstände (photochrome Perücke, Hinterkleidung von Edelsteinen oder Edelsteinimitationen, Modeschmuck wie z.B. Glasperlenkette);
- in der Kosmetik (Haarlack, Nagellack, Lippenstift);
- in Kaufhäusern für Anzeigen, Angebote, etc.;
- als Zwischenschicht zwischen zwei Glasscheiben;
- für temporäre Masken.

Die folgenden Beispiele dienen der weiteren Erläuterung der vorliegenden Erfindung.

### Referenzbeispiel 1

Eine Mischung von 236,34 g (1 Mol) 3-Glycidoxypropyltrimethoxysilan (GPTMS) und 27,122 g 0,1 n Salzsäure wurde bei Raumtemperatur unter Rühren 2 Stunden lang vorhydrolysiert.

Einer Mischung von 10,54 g des obigen Vorhydrolysats und 2,52 g Bis(epoxycyclohexyl)methylcarboxylat wurde der photochrome Farbstoff 1,3,3-Trimethyl-spiro[indolino-2,3-(3H)-naphtho-(2,1-b)-1,4-oxazin] (0,136 g; 0,415 mM) zugesetzt und das resultierende Gemisch wurde ½ Stunde bei Raumtemperatur gerührt, bis sich der Farbstoff aufgelöst hatte. Darauf wurden 0.286 g eines der in den folgenden Tabellen angegebenen Antioxidationsmittel oder UV-Absorber zugesetzt, worauf weitere 15 Minuten bei Raumtemperatur gerührt wurde. Schließlich wurden noch 1,02 g Vernetzungsmittel (Isophorondiamin) zugegeben, woran sich ein 5-minütiges Rühren anschloß.

Nach Filtration durch einen Filter mit einer Porengröße von 1,0 µm wurde die resultierende Beschichtungszusammensetzung mit Hilfe eines Tauchverfahrens auf Mikroskop-Objektträger aus Glas aufgetragen. Die beschichteten Träger wurden in einem Elektroofen bei einer Temperatur zwischen 80 und 110°C 1 bis 6 Stunden lang behandelt.

### Beispiel 1

Zu einer Mischung von 5,27 g des in Referenzbeispiel 1 beschriebenen Vorhydrotysats und 4,26 g einer Mischung von GPTMS und nanoskaligen SiO₂-Teilchen (3,3 Gew.-% SiO₂ bezogen auf GPTS-Mischung) sowie von 2,52 g Bis(epoxycyclohexyl)methylcarboxylat wurde der in Referenzbeispiel 1 eingesetzte photochrome Farbstoff in der in Beispiel 1 angegebenen Menge gegeben, worauf sich ein ½-stündiges Rühren bei Raumtemperatur bis zur Auflösung des Farbstoffes anschloß. Danach wurde weiter wie in Referenzbeispiel 1 vorgegangen.

Die wie oben hergestellten Objektträger aus Glas wurden für UV-spektroskopische Messungen eingesetzt. Bestimmt wurden sowohl das photochrome Ansprechen (ΔA₀) als auch die Verblassungs-Halbwertszeit (t_{0,5}) unter Verwendung eines UV-Spektrophotometers (HP 8453 UV-VIS) mit einer Leistung von 5 mW/cm² und einer Eindunkelungszeit von 20 - 25 Sekunden.

Weiter wurde die Ritzhärte des resultierenden Überzuges mit Hilfe eines modifizierten Vicker-Tests bestimmt.

Die erhabenen Ergebnisse sind in der folgenden Tabelle 1 zusammengefaßt. In dieser Tabelle werden die folgenden Abkürzungen verwendet:
- TNPP =: Tris(p-nonylphenyl)phosphit
- BHT =: 2,6-Di-tert-butyl-4-methylphenol
- BDPM =: Bis(3,5-di-tert-butyl-4-hydroxyphenyl)methan

Die UV-Absorber vom Tinuvin®- bzw. Cyasorb®-Typ enthalten Benzotriazol- bzw. Benzophenon-Derivate.

**TABELLE 1:**

| Gemessenes photochromes Ansprechen (ΔA₀), Verblassungshalbwertszeit (t_{0,5}) und Ritzhärte von organisch-anorganischen Komposit-Beschichtungen mit dem photochromen Farbstoff 1,3,3-Trimethylspiro-[indolino-2,3-(3H)-naphtho-(2,1-b)-1,4-oxazin] und einem Stabilisator | | | | |
|---|---|---|---|---|
| **Stabilisatoren** | | **Meßergebnisse** | | |
| **Antioxidationsmittel** | **UV-Absorber** | **ΔA**_{**0**} | **t**_{**0,5**} **[s]** | **Ritzhärte [g]** |
| TNPP | \ | 0,655 | 2,8 | 10 |
| BDPM | \ | 0,579 | 2,8 | 10 |
| BHT | \ | 0,531 | 2,8 | 10 |
| BHT/SiO₂ | \ | 0,730 | 2,0 | 15 |
| Tetrafluorhydrochinon | \ | 0,538 | 2,2 | 33 |
| \ | Ergosterol | 0,656 | 2,6 | 10 |
| \ | Urocansäure | 0,555 | 2,0 | 18 |
| \ | Urocansäure/SiO₂ | 0,477 | 2,0 | 37 |
| \ | Tinuvin 326/SiO₂ | 0,175 | 1,6 | 16 |
| \ | Tinuvin 327/SiO₂ | 0,184 | 1,8 | 20 |
| \ | Tinuvin 328/SiO₂ | 0,219 | 2,0 | 15 |
| \ | Cyasorb UV 5411/SiO₂ | 0,211 | 1,8 | 18 |

Die Lichtstabilität der entsprechenden Beschichtungen wurde mit Hilfe von UV-Bestrahlung unter Verwendung einer entsprechenden Vorrichtung mit einer Leistung von 75 mW/cm² (Heraeus Suntest CPS) bestimmt. Die erhaltenen Ergebnisse sind in der folgenden Tabelle 2 angegeben.

**TABELLE 2:**

| Suntest-Untersuchungen von organisch-anorganischen Komposit-Beschichtungen mit dem photochromen Farbstoff 1,3,3-Trimethylspiro-[indolino-2,3-(3H)-naphtho-(2,1-b)-1,4-oxazin] und einem Stabilisator. Die angegebene Zeit in Stunden entspricht der Zeit im Suntest, bis zu der die Probe auf 50% des ursprünglichen photochromen Ansprechens (ΔA₀) reduziert wird. | | |
|---|---|---|
| **Stabilisatoren** | | **Meßergebnisse** |
| **Antioxidationsmittel** | **UV-Absorber** | **Suntest-Zeit bis zum Zurückgehen des photochromen Ansprechens auf 50%** |
| TNPP | \ | 30 h |
| BDPM | \ | 25 h |
| BHT | \ | 27 h |
| BHT/SiO₂ | \ | 86 h |
| Tetrafluorhydrochinon | \ | 53 h |
| \ | Ergosterol | 31 h |
| \ | Urocansäure | 49 h |
| \ | Urocansäure/SiO₂ | 112 h |
| \ | Tinuvin 326/SiO₂ | 132 h |
| \ | Tinuvin 327/SiO₂ | 120 h |
| \ | Tinuvin 328/SiO₂ | 133 h |
| \ | Cyasorb UV 5411/SiO₂ | 133 h |

Nach einer etwa 4-wöchigen Aufbewahrung bei Raumtemperatur im Dunkeln wurden einige der Proben erneut hinsichtlich ihrer Lichtstabilität untersucht. Die Ergebnisse sind in der folgenden Tabelle 3 angegeben.

**TABELLE 3:**

| Suntest-Untersuchungen von organisch-anorganischen Komposit-Beschichtungen mit dem photochromen Farbstoff 1,3,3-Trimethylspiro-[indolino-2,3-(3H)-naphtho-(2,1-b)-1,4-oxazin] und einem Stabilisator nach ca. vierwöchiger Aufbewahrung im Dunkeln. Die angegebene Zeit in Stunden entspricht der Zeit im Suntest, bis zu der die Probe auf 50% des ursprünglichen photochromen Ansprechens (ΔA₀) reduziert wird. | | |
|---|---|---|
| **Stabilisatoren** | | **Meßergebnisse** |
| **Antioxidationsmittel** | **UV-Absorber** | **Suntest-Zeit bis zum Zurückgehen des photochromen Ansprechens auf 50%** |
| TNPP | \ | 52 h |
| BDPM | \ | 47 h |
| BHT | \ | 52 h |
| BHT/SiO₂ | \ | 108 h |
| Tetrafluorhydrochinon | \ | 112 h |
| \ | Ergosterol. | 68 h |
| \ | Urocansäure | 74 h |
| \ | Urocansäure/SiO₂ | 152 h |

### Referenzbeispiel 2

Zu einer Mischung aus 6,58 g (0,025 Mol) GPTMS-Vorhydrolysat (Referenzbeispiel 1) und 1,04 g (0,005 Mol) TEOS (Tetraethoxysilan) wurden 0,25 Gew-% Photosubstanz, bezogen auf die Gesamt-Solmenge, bei Raumtemperatur unter Rühren gelöst. Danach wurden x Mol% pro Epoxidfunktion an Vernetzer IDA (Isophorondiamin) zugegeben und ca. 5 min nachgerührt. Hierbei wurde für x = 10, 15, 20, 25 und 30 eingesetzt.

### Referenzbeispiel 3

Zu einer Mischung aus 6,58 g (0,025 Mol) GPTMS-Vorhydrolysat (Referenzbeispiel 1) und 1,04 g (0,005 Mol) TEOS wurden y Mol Spacer PCF (Poly(phenylglycidylether)-coformaldehyd, M ≈ 345 g/Mol, 2.2 Epoxidgruppen pro Molekül) unter Rühren zugesetzt und danach wurden 0,25 Gew-% Photosubstanz, bezogen auf die Gesamt-Solmenge bei Raumtemperatur unter Rühren in die Mischung gelöst. Anschließend wurden 10 Mol% pro Epoxidfunktion an Vernetzer IDA unter Rühren zugesetzt und ca. 5 min nachgerührt. Hierbei wurde für y = 0; 0,005; 0,01; 0,015; 0,02; und 0,025 eingesetzt.

### Referenzbeispiel 4

Die in den Referenzbeispielen 2 und 3 erhaltenen Ansätze wurden nach einer Filtration mit einer Filter der Porengröße 1,0 µm durch Fluten auf Mikroskop-Objektträger aus Glas aufgetragen. Die beschichteten Träger wurden in einem Elektroofen bei einer Temperatur von 130 °C für 2 Stunden behandelt.

Die kinetische Untersuchung der Beschichtungen erfolgte mit einem UV-VIS-Spektralphotometer HP 8453 bei 25 °C, wobei als UV-Lichtquelle eine Xenon-Lampe XBO 450 W/1 eingesetzt wurde.

Die erhaltenen Ergebnisse sind in den folgenden Tabellen zusammengefaßt. In diesen Tabellen werden die folgenden Abkürzungen verwendet:
- **Blue A:**: 1,3-Dihydro-1,3,3-trimethyl-spiro[2H-indol-2,3'-[3H]-naphth-(2,1-b)(1,4)-oxazin]
- **CL1:**: 5-Chloro-1,3-dihydro-1,3,3-trimethyl-spiro[2H-indol-2,3'-[3H]-naphth--(2,1-b)(1,4)oxazin]
- **CL2:**: 5-Chloro-1,3-dihydro-1,3,3-trimethyl-spiro[2H-indol-2,3'-[3H]-phenanthr-(9,10-b)(1,4)-oxazin]
- **PC3:**: 1,3-Dihydro-1,3,3-trimethyl-spiro[2H-indol-2,3'-[3H]-phenanthr-(9,10-b)(1,4)-oxazin]
- **Photo L:**: 3,3-Diphenyl-[2H]-naphthopyran
- **Blue D:**: 1,3-Dihydro-1,3,3,5,6-pentamethyl-spiro[2H-indol-2,3'-[3H]-naphth-(2,1-b)(1,4)-oxazin]
- **Red PNO:**: 1,3-Dihydro-1,3,3-trimethyl-6'-piperidino-spiro[2H-indol-2,3'-[3H]-naphth-(2,1-b)(1,4)-oxazin
- **IDA:**: Isophorondiamin
- **PCF:**: Poly(phenylglycidylether)-co-formaldehyd, M ≈ 345 g/Mol, 2.2 Epoxidgruppen pro Molekül
- **t**_{**A**}**:**: Halbwertszeit der Aufhellung einer Photosubstanz
- **t**_{**E**}**:**: Halbwertszeit der Eindunkelung einer Photosubstanz

**Tabelle 4:**

| Abhängigkeit der Halbwertszeit für die Aufhellung verschiedener Photosubstanzen in Beschichtungen auf Glas (2 h bei 130 °C verdichtet) von der Vemetzermenge | | | | | | |
|---|---|---|---|---|---|---|
| Photosubstanz | | 10 Mol% IDA | 15 Mol% IDA | 20 Mol% IDA | 25 Mol% IDA | 30 Mol% IDA |
| Blue A | t_{A}: | 1.6 s | 2.8 s | 6.0 s | 9.0 s | 20.0 s |
| CI1 | t_{A}: | 1.2 s | 3.6 s | 9.6 s | 16.0 s | 27.0 s |
| PC3 | t_{A}: | 1.8 s | 2.4 s | 5.0 s | 10.0 s | 22.1 s |
| Cl2 | t_{A}: | 3.0 s | 6.0 s | 12.0 s | 20.0 s | 40.0 s |
| Photo L | t_{A}: | 7.2 s | 10.4 s | 15.0 s | 20.4 s | 32.0 s |
| Blue D | t_{A}: | 6.0 s | 9.6 s | 16.0 s | 32.0 s | 44.0 s |
| Red PNO | t_{A}: | 4.4 s | 7.2 s | 20.0 s | 40.0 s | 70.0 s |

**Tabelle 5:**

| Abhängigkeit der Halbwertszeit für die Eindunkelung verschiedener Photosubstanzen in Beschichtungen auf Glas (2 h bei 130 °C verdichtet) von der Vemetzermenge | | | | | | |
|---|---|---|---|---|---|---|
| Photosubstanz | | 10 Mol% IDA | 15 Mol% IDA | 20 Mol% IDA | 25 Mol% IDA | 30 Mol% IDA |
| Blue A | t_{E}: | 1.6 s | 2.2 s | 5.0 s | 8.0 s | 13.0 s |
| Cl1 | t_{E}: | 1.2 s | 3.0 s | 7.4 s | 10.0 s | 16.0 s |
| PC3 | t_{E}: | 2.0 s | 2.6 s | 6.0 s | 8.0 s | 13.6 s |
| CI2 | t_{E}: | 3.0 s | 6.0 s | 12.0 s | 20.0 s | 40.0 s |
| Photo L | t_{E}: | 5.6 s | 7.0 s | 8.4 s | 10.2 s | 14.0 s |
| Blue D | t_{E}: | 5.6 s | 8.0 s | 11.0 s | 18.0 s | 26.0 s |
| Red PNO | t_{E}: | 3.6 s | 5.0 s | 12.0 s | 20.0 s | 30.0 s |

**Tabelle 6:**

| Abhängigkeit der Halbwertszeit für die Aufhellung verschiedener Photosubstanzen in Beschichtungen auf Glas (2 h bei 130 °C verdichtet) von der Spacermenge | | | | | | | |
|---|---|---|---|---|---|---|---|
| Photosubstanz | | 0 mMol PCF | 5 mMol PCF | 10 mMol PCF | 15 mMol PCF | 20 mMol PCF | 25 mMol PCF |
| Blue A | t_{A}: | 1.8 s | 2.8 s | 5.2 s | 6.4 s | 8.0 s | 1 0.8 s |
| CI1 | t_{A}: | 1.2 s | 3.2 s | 3.6 s | 4.8 s | 6.4 s | 11.2 s |
| PC3 | t_{A}: | 1.8 s | 4.8 s | 5.6 s | 6.4 s | 12.8 s | 14.0 s |
| CI2 | t_{A}: | 2.8 s | 5.6 s | 10.4 s | 11.2 s | 18.0 s | 22.8 s |
| Photo L | t_{A}: | 7.2 s | 9.0 s | 9.6 s | 13.2 s | 14.6 s | 16.8 s |
| Blue D | t_{A}: | 6.0 s | 10.4 s | 13.6 s | 20.0 s | 28.6 s | 35.2 s |
| Red PN O | t_{A}: | 4.4 s | 8.4 s | 15.0 s | 21.6 s | 24.8 s | 35.0 s |

**Tabelle 7:**

| Abhängigkeit der Halbwertszeit für die Eindunkelung verschiedener Photosubstanzen in Beschichtungen auf Glas (2 h bei 130 °C verdichtet) von der Spacer-Menge | | | | | | | |
|---|---|---|---|---|---|---|---|
| Photosubstanz | | 0 mMol PCF | 5 mMol PCF | 10 mMol PCF | 15 mMol PCF | 20 mMol PCF | 25 mMol PCF |
| Blue A | t_{E}: | 1.6 s | 2.6 s | 4.8 s | 5.6 s | 6.8 s | 9.2 s |
| CI1 | t_{E}: | 1.2 s | 2.8 s | 3.6 s | 4.4 s | 6.0 s | 9.6 s |
| PC3 | t_{E}: | 2.0 s | 4.0 s | 5.6 s | 6.6 s | 11.2 s | 12.0 s |
| CI2 | t_{E}: | 3.0 s | 5.2 s | 8.4 s | 9.6 s | 14.4 s | 17.4 s |
| Photo L | t_{E}: | 5.6 s | 6.0 s | 7.2 s | 9.0 s | 8.4 s | 1 0.8 s |
| Blue D | t_{E}: | 5.6 s | 8.8 s | 10.4 s | 17.6 s | 20.6 s | 22.4 s |
| Red PN O | t_{E}: | 3.6 s | 6.0 s | 9.6 s | 13.2 s | 14.4 s | 14.0 s |

## Patentansprüche

1. Photochrome Beschichtungszusammensetzung, umfassend:
(a) ein Silicium-haltiges Vorkondensat, das abgeleitet ist von mindestens einem hydrolysierbaren Silan A mit mindestens einem hydrolysestabilen Rest R, der über eine funktionelle Gruppe X verfügt, die eine thermisch und/oder photochemisch induzierte Polyadditions-, Potymerisations- oder Polykondensationsreaktion eingehen kann, sowie gegebenenfalls von einer oder mehreren zusätzlichen hydrolysierbaren Verbindungen von Elementen aus der Gruppe Si, Al, Ti, Zr, Ta, Nb, Sn, Zn, W und Ge;
(b) mindestens einen photochromen Farbstoff,
(c) mindestens einen Stabilisator; und .
(d) nanoskalige Teilchen mit einer durchschnittlichen Teitchengröße von nicht mehr als 200 nm.

2. Zusammensetzung nach Anspruch 1, **dadurch gekennzeichnet, daß** das Vorkondensat (a) abgeleitet ist von mindestens einem Silan A mit Epoxy-, Mercapto- oder (Meth)acrylgruppe X.

3. Zusammensetzung nach irgendeinem der Ansprüche 1 und 2, **dadurch gekennzeichnet, daß** das Silan A ausgewählt ist aus Verbindungen der allgemeinen Formel (I)
R¹ ₓSiR³ ₍₃₋ₓ₎R (I)
worin die Reste R¹ gleich oder verschieden sind und ausgewählt sind aus C₁₋₄-Alkoxygruppen, Halogenatomen und Acylgruppen und insbesondere für Methoxy oder Ethoxy stehen, R³ ein Alkyl- oder Aryl-Rest ist, R wie in Anspruch 1 oder 2 definiert ist und x 1, 2 oder 3 bedeutet.

4. Zusammensetzung nach irgendeinem der Ansprüche 1 bis 3, **dadurch gekennzeichnet, daß** der Rest R ausgewählt ist aus solchen der allgemeinen Formeln (II) und (III): 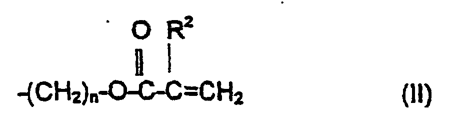 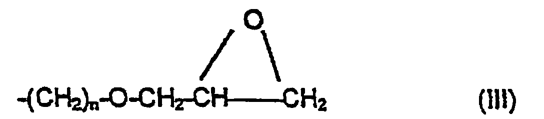 worin R² Wasserstoff oder Methyl bedeutet und n eine ganze Zahl von 1 bis 6, vorzugsweise 2 bis 4, ist.

5. Zusammensetzung nach irgendeinem der Ansprüche 1 bis 4, **dadurch gekennzeichnet, daß** das Silan A 3-Glycidoxypropyltri(m)ethoxysilan oder 3-Methacryloxypropyltri(m)ethoxysilan umfaßt.

6. Zusammensetzung nach irgendeinem der Ansprüche 1 bis 5, **dadurch gekennzeichnet, daß** der photochrome Farbstoff (b) ausgewählt ist aus der Gruppe der Spirooxazine, Spiropyrane, Naphthopyrane, Fulgide und Dihydroindolizine.

7. Zusammensetzung nach irgendeinem der Ansprüche 1 bis 6, **dadurch gekennzeichnet, daß** der photochrome Farbstoff (b) mindestens ein Spirooxazin oder Naphthopyran umfaßt

8. Zusammensetzung nach irgendeinem der Ansprüche 1 bis 7, **dadurch gekennzeichnet, daß** der Stabilisator aus Antioxidationsmitteln und/oder UV-Absorbern ausgewählt ist, insbesondere solchen aus der Gruppe der mit sterisch hindernden Gruppen substituierten Phenole, Hydrochinone, Brenzkatechine, aromatischen Amine und der organischen Phosphite und Phosphonate, der Derivate des Benzophenons, der substituierten Benzotriazole, der in 3-Stellung Phenyl-substituierten Acrylate (Zimtsäure-Derivate), der Salicylate und der Naturstoffe.

9. Zusammensetzung nach irgendeinem der Ansprüche 1 bis 7, **dadurch gekennzeichnet, daß** der Stabilisator 3-(5-Imidazolyl)acrysläure und/oder Ergosterol umfaßt

10. Zusammensetzung nach irgendeinem der Ansprüche 1 bis 9, **dadurch gekennzeichnet, daß** sie nanoskalige Teilchen aus der Gruppe der Oxide, Nitride, Carbide, Silicide, Boride und Carbonitride von Al, Si, Ti, Zr, Hf, W, Ga, Nb, Ta, Sn, Zn und/oder Ge enthält.

11. Zusammensetzung nach Anspruch 10, **dadurch gekennzeichnet, daß** sie nanoskalige SiO₂-Teilchen enthält.

12. Zusammensetzung nach irgendeinem der Ansprüche 1 bis 11, **dadurch gekennzeichnet, daß** die Komponenten (b) und (c) bezogen auf das Gesamtgewicht der Komponenten (a), (b) und (c) in den folgenden Mengen anwesend sind:
0,05 bis 5, vorzugsweise 0,1 bis 2 Gewichts-% (b);
0,1 bis 5, vorzugsweise 0,5 bis 2,5 Gewichts-% (c).

13. Verfahren zum Versehen eines Substrats mit einem photochromen Überzug, **dadurch gekennzeichnet, daß** man auf das Substrat eine Beschichtungszusammensetzung nach irgendeinem der Ansprüche 1 bis 12 aufbringt und anschließend thermisch und/oder photochemisch härtet.

14. Verfahren nach Anspruch 13, **dadurch gekennzeichnet, daß** der Beschichtungszusammensetzung spätestens unmittelbar vor dem Aufbringen auf das Substrat ein thermischer und/oder photochemischer Härtungskatalysator zugesetzt wird.

15. Verfahren nach irgendeinem der Ansprüche 13 und 14, **dadurch gekennzeichnet, daß** es sich bei dem Substrat um ein solches aus Kunststoff, Glas, Papier, Textilien, Metall, Holz, Stein oder Kerarnik handelt.

16. Verfahren nach irgendeinem der Ansprüche 13 bis 15, **dadurch gekennzeichnet, daß** das Substrat dazu bestimmt ist, einer variierenden Bestrahlung mit sichtbarem und/oder UV-Licht ausgesetzt zu werden.

17. Mit einer photochromen Schicht versehenes Substrat, erhältlich nach dem Verfahren eines der Ansprüche 13 bis 16.

## Claims

1. Photochromic coating composition comprising:
(a) a silicon-containing precondensate derived from at least one hydrolysable silane A containing at least one hydrolysis-stable radical R which has a functional group X which is capable of undergoing a thermally and/or photochemically induced polymerization reaction, and optionally from one or more additional hydrolysable compounds of elements from the group consisting of Si, Al, Ti, Zr, Ta, Nb, Sn, Zn, W and Ge;
(b) at least one photochromic dye;
(c) at least one stabilizer; and
(d) nanoscale particles having an average particle size of not more than 200 nm.

2. Composition according to Claim 1, **characterized in that** the precondensate (a) is derived from at least one silane A containing an epoxide, mercapto or (meth)acrylyl group X.

3. Composition according to Claim 1, **characterized in that** the silane A is selected from compounds of the general formula (I)
R¹ ₓSiR³ ₍₃₋ₓ₎R (I)
in which the radicals R¹ are identical or different and are selected from C₁₋₄-alkoxy groups, halogen atoms and acyl groups and in particular are methoxy or ethoxy, R³ is an alkyl or aryl radical, R is as defined in Claim 1 or 2, and x is 1, 2 or 3.

4. Composition according to Claim 1, **characterized in that** the radical R is selected from those of the general formulae (II) and (III): 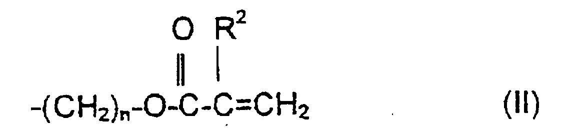 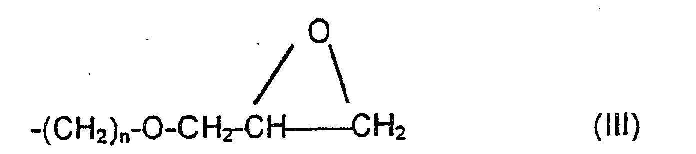 in which R² is hydrogen or methyl, and n is an integer from 1 to 6, preferably from 2 to 4.

5. Composition according to Claim 1, **characterized in that** the silane A is 3-glycidoxypropyltri(m)ethoxysilane or 3-methacryloxypropyltri(m)ethoxysilane.

6. Composition according to Claim 1, **characterized in that** the photochromic dye (b) is selected from the group consisting of the spirooxazines, spiropyrans, naphthopyrans, fulgides and dihydroindolizines.

7. Composition according to Claim 6, **characterized in that** the photochromic dye (b) comprises at least one spirooxazine or naphthopyran.

8. Composition according to Claim 1, **characterized in that** the stabilizer is selected from antioxidants and/or UV absorbers, in particular those from the group consisting of phenols, hydroquinones, pyrocatechols and aromatic amines which are substituted by sterically hindering groups, and organic phosphites and phosphonates, derivatives of benzophenone, substituted benzotriazoles, 3-phenyl-substituted acrylates (cinnamic acid derivatives), salicylates and natural products.

9. Composition according to Claim 1, **characterized in that** the stabilizer comprises 3-(5-imidazolyl)acrylic acid and/or ergosterol.

10. Composition according to Claim 1, **characterized in that** it comprises nanoscale particles from the group consisting of the oxides, nitrides, carbides, salicides, borides and carbonitrides of Al, Si, Ti, Zr, Hf, W, Ga, Nb, Ta, Sn, Zn and/or Ge.

11. Composition according to Claim 10, **characterized in that** it comprises nanoscale SiO₂ particles.

12. Composition according to Claim 1, **characterized in that** components (b) and (c) are present in the following amounts, based on the total weight of components (a), (b) and (c):
from 0.05 to 5% by weight, preferably from 0.1 to 2% by weight, of (b);
from 0.1 to 5% by weight, preferably from 0.5 to 2.5% by weight, of (c).

13. Process for providing a substrate with a photochromic coating, **characterized in that** a coating composition according to Claim 1 is applied to the substrate and subsequently cured thermally and/or photochemically.

14. Process according to Claim 13, **characterized in that** a thermal and/or photochemical curing catalyst is added to the coating composition at the latest immediately before application to the substrate.

15. Process according to Claim 13, **characterized in that** the substrate is made of plastic, glass, paper, textiles, metal, wood, stone or ceramic.

16. Process according to Claim 13, **characterized in that** the substrate is intended to be exposed to varying irradiation with visible and/or UV light.

17. Substrate provided with a photochromic layer, obtainable by the process according to Claim 13.

## Revendications

1. Composition de revêtement photochromique, qui comprend :
(a) un précondensat contenant du silicium, qui est issu d'au moins un silane hydrolysable A ayant au moins un reste R stable vis-à-vis de l'hydrolyse, qui dispose d'un groupe fonctionnel X qui peut subir une réaction de polyaddition, de polymérisation ou de polycondensation amorcée par voie thermique et/ou voie photochimique, et éventuellement d'un ou plusieurs dérivés hydrolysables supplémentaires d'éléments pris parmi Si, Al, Ti, Zr, Ta, Nb, Sn, Zn, W et Ge ;
(b) au moins un colorant photochromique,
(c) au moins un stabilisant, et
(d) des particules de l'ordre de grandeur du nanomètre, ayant une taille moyenne de particule qui ne dépasse pas 200 nm.

2. Composition selon la revendication 1, **caractérisée en ce que** le précondensat (a) est issu d'au moins un silane A ayant un groupe époxy, mercapto, acrylique ou méthacrylique comme groupe X.

3. Composition selon la revendication 1 ou 2, **caractérisée en ce que** le silane A est choisi parmi les composés de formule générale (I)
R¹ ₓSiR³ ₍₃₋ₓ₎R (I)
dans laquelle les restes R¹ sont identiques ou différents et sont choisis parmi les groupes alcoxy en C₁ à C₄, les atomes d'halogène et les groupes acyle, et représentent en particulier des groupes méthoxy ou éthoxy, R³ représente un groupe alkyle ou aryle, R est défini comme cela est indiqué dans la revendication 1 ou 2, et x est égal à 1, 2 ou 3.

4. Composition selon l'une quelconque des revendications 1 à 3, **caractérisée en ce que** le reste R est choisi parmi les restes de formule générale (II) ou (III) : 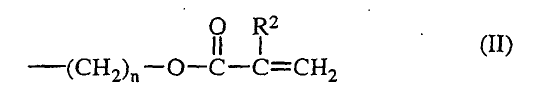 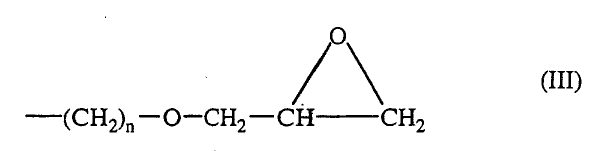 dans laquelle R² représente un atome d'hydrogène ou un groupe méthyle et n désigne un nombre entier de 1 à 6, de préférence de 2 à 4.

5. Composition selon l'une quelconque des revendications 1 à 4, **caractérisée en ce que** le silane A comprend le 3-glycidoxypropyltri(m)éthoxysilane ou le 3-méthacryloxypropyltri(m)éthoxysilane.

6. Composition selon l'une quelconque des revendications 1 à 5, **caractérisée en ce que** le colorant photochromique (b) est choisi dans le groupe des spiro-oxazines, spiropyrannes, naphtopyrannes, fulgides et dihydroindolizines.

7. Composition selon l'une quelconque des revendications 1 à 6, **caractérisée en ce que** le colorant photochromique (b) comprend au moins une spiro-oxazine ou un naphtopyranne.

8. Composition selon l'une quelconque des revendications 1 à 7, **caractérisée en ce que** le stabilisant est choisi parmi des antioxydants et/ou des agents absorbant les rayons UV, en particulier ceux appartenant au groupe constitué par les phénols, hydroquinones, pyrocatéchols et amines aromatiques, substitués par des groupes stériquement encombrants, et par les phosphites et phosphonates organiques, les dérivés de la benzophénone, les benzotriazoles substitués, les acrylates substitués en position 3 par un groupe phényle (dérivés de l'acide cinnamique), les salicylates et les produits naturels.

9. Composition selon l'une quelconque des revendications 1 à 7, **caractérisée en ce que** le stabilisant comprend de l'acide 3-(5-imidazolyl)acrylique et/ou de l'ergostérol.

10. Composition selon l'une quelconque des revendications 1 à 9, **caractérisée en ce qu'**elle contient des particules de l'ordre de grandeur du nanomètre, appartenant au groupe constitué par les oxydes, nitrures, carbures, siliciures, borures et carbonitrures de Al, Si, Ti, Zr, Hf, W, Ga, Nb, Ta, Sn, Zn et Ge.

11. Composition selon la revendication 10, **caractérisée en ce qu'**elle contient des particules de SiO₂ de l'ordre de grandeur du nanomètre.

12. Composition selon l'une quelconque des revendications 1 à 11, **caractérisée en ce que** les constituants (b) et (c) sont présents en les proportions suivantes, ces proportions étant rapportées au poids total des constituants (a), (b) et (c) :
0, 05 à 5 % en poids, de préférence 0, 1 à 2 % en poids pour le constituant (b),
0, 1 à 5 % en poids, de préférence 0, 5 à 2, 5% en poids pour le constituant (c).

13. Procédé pour munir un support d'un revêtement photochromique, **caractérisé en ce que** l'on applique sur le support une composition de revêtement selon l'une quelconque des revendications 1 à 12 et on la fait durcir ensuite par voie thermique et/ou voie photochimique.

14. Procédé selon la revendication 13, **caractérisé en ce que** l'on ajoute à la composition de revêtement, au plus tard immédiatement avant l'application sur le support, un catalyseur de durcissement par voie thermique et/ou par voie photochimique.

15. Procédé selon la revendication 13 ou 14, **caractérisé en ce que** le support est un support en matière plastique, en verre, en papier, en matière textile, en métal, en bois, en pierre ou en matière céramique.

16. Procédé selon l'une quelconque des revendications 13 à 15, **caractérisé en ce que** le support est destiné à être soumis à une irradiation variable par de la lumière visible et/ou de la lumière ultraviolette.

17. Support muni d'une couche photochromique, que l'on peut obtenir par le procédé selon l'une quelconque des revendications 13 à 16.
